# EUROPEAN PATENT SPECIFICATION

(11) **EP 2 667 103 B1**
(45) Date of publication and mention of the grant of the patent: **13.04.2016**
(21) Application number: 12737161.5
(22) Date of filing: 19.01.2012
(51) Int. Cl.: F24D 7/00, F24F 1/00, F24F 11/02, F24D 15/04, F25B 49/02, F24D 19/00

(54) **AIR CONDITIONER**
KLIMAANLAGE
CLIMATISEUR

(30) Priority: 19.01.2011 JP 2011009264
(43) Date of publication of application: 27.11.2013
(73) Proprietor: DAIKIN INDUSTRIES, LTD., Osaka 530-8323 (JP)
(72) Inventor: FUJIOKA, Yuuki, 2-Chome, Kita-Ku, Osaka-Shi, Osaka 530-8323 (JP); KIZAWA, Toshihiro, 2-Chome, Kita-Ku, Osaka-Shi, Osaka 530-8323 (JP)
(74) Representative: Hoffmann Eitle
(86) International application number: PCT/JP2012/051055
(87) International publication number: WO 2012/099192

(56) References cited:
- EP-A1- 0 431 491
- WO-A1-2008/004621
- WO-A1-2010/106771
- JP-A- 4 048 140
- JP-A- 6 307 705
- JP-A- H02 259 348
- US-A- 5 170 936

## Description

### Technical Field

The present invention relates to an air conditioner including an indoor heat exchanger, a fan, and a radiation heat exchanger.

### Background Art

As an indoor unit of an air conditioner, there has been one including an indoor fan, an indoor heat exchanger disposed to oppose to the indoor fan, and a radiation panel (radiation heat exchanger) arranged on the surface of the indoor unit. During a heating operation, a high temperature, high pressure refrigerant discharged from a compressor provided in an outdoor unit is supplied to the indoor heat exchanger and the radiation panel.

For example, an air conditioner described in PTL 1 is capable of performing heating operation by causing the refrigerant to flow not in the radiation panel, but in the indoor heat exchanger, and performing a heating operation by causing the refrigerant to flow not in the indoor heat exchanger, but in the radiation panel.

### Citation List

### Patent Literature

[PTL 1] Japanese Unexamined Patent Publication No.280762/1993 (Tokukaihei 5-280762)

Document US 5 170 936 A describes a heat pump type apparatus according to the preamble of claim 1 with an air heating mode which heats a whole space using an internal heat-exchanger, a floor heating mode which heats the floor around the space using a floor heating panel, and a combined use of both type heating. In the combined use mode, the apparatus compensates the desired preset room temperature by a specified value in response to the results of a comparison of an actual floor temperature and a desired preset floor temperature.

Document JP H02 259348 A describes an air conditioner, wherein when space heating solely by an air heating means is selected with a mode selection means, a control device causes a normal air heating to be performed through controlling the operation of the air heating means in accordance with a deviation determined by a first comparator means between a room temperature signal from a room temperature sensing means and a set temperature dictated by a setting means. On the other hand, when the heating mode by both the radiation heating means and air heating means is selected, the set temperature dictated by the setting means is automatically lowered by a setting changing means by a predetermined amount, which is compared in a second comparator means with the room temperature detected by the room temperature sensing means to determine the deviation between them. The operation of the air heating means is controlled based on the deviation so determined. Thus, a comfort level as good as the normal heating mode operation can be maintained with simple procedures.

### Summary of Invention

### Technical Problem

In an air conditioner in general, the heating load is determined based on the temperature difference between the indoor temperature and an indoor target temperature. Therefore, the operational frequency of the compressor is controlled based on the temperature difference. In the air conditioner of PTL 1, the operational frequency of the compressor is believed to be controlled based on the temperature difference between the indoor temperature and the indoor target temperature, even when both the warm-air heating and the radiation heating are performed. However, if a control similar to the above is performed in an operation that performs both the warm-air heating and the radiation heating, the frequency of the compressor decreases when the temperature difference between the indoor temperature and the indoor target temperature is small. At this time, the temperature of the radiation heat exchanger significantly decreases with the decrease in the frequency of the compressor. Therefore, in an operation that performs both the warm-air heating and the radiation heating, there is a problem that the radiation heat exchanger cannot be maintained at a high temperature.

In view of this, an object of the present invention is to provide an air conditioner capable of maintaining the temperature of the radiation panel (radiation heat exchanger) at a high temperature, in a heating operation that performs both the warm-air heating and the radiation heating.

### Solutions to the Problem

The above object is achieved by the air conditioner according to the appended claims.

A first aspect of the present invention is an air conditioner, including a refrigerant circuit having a compressor, an indoor heat exchanger, a radiation heat exchanger, a decompression structure, and an outdoor heat exchanger, wherein: the indoor heat exchanger is provided inside the indoor unit so as to oppose to a fan; the radiation heat exchanger is provided on a surface of the indoor unit; the air conditioner further comprising a controller configured to increase or decrease the frequency of the compressor based on a temperature difference between an indoor target temperature and an indoor temperature; the air conditioner is capable of performing a warm-air heating operation that performs warm-air heating by causing the refrigerant to flow not in the radiation heat exchanger but in the indoor heat exchanger, and a radiation heating operation that causes the refrigerant to flow in the indoor heat exchanger to perform the warm-air heating and causes the refrigerant to flow also in the radiation heat exchanger to perform radiation heating; and timings at which the controller increases or decreases the frequency of the compressor during the radiation heating operation and timings at which the controller increases or decreases the frequency of the compressor during the warm air heating operation, are made different from one another.

In this air conditioner, for example, when the indoor temperature which is far from the indoor target temperature is becoming closer to the indoor target temperature, the timing for decreasing the frequency of the compressor in the radiation heating operation which performs both the warm-air heating and the radiation heating is made behind the timing of the same in the warm-air heating operation which performs only the warm-air heating. This restrains a decrease in the temperature of the radiation heat exchanger, as compared with a case where the timing is made the same as that in the warm-air heating operation. Further, for example, in cases where the indoor temperature close to the indoor target temperature varies to a temperature with more difference from the indoor target temperature, the temperature of the radiation heat exchanger is more promptly brought up to a high temperature by making the timing for increasing the frequency of the compressor in the radiation heating operation earlier than the timing of the same in the warm-air heating operation, as compared with a case where the timing is made the same as that in the warm-air heating operation. This enables maintaining of the temperature of the radiation heat exchanger at a high temperature.

Note that the "temperature difference between the indoor target temperature and the indoor temperature" is a value resulting from subtraction of the indoor temperature from the indoor target temperature, and takes a negative value when the indoor temperature is higher than the indoor target temperature.

According to the present invention, the air conditioner is adapted so that: in cases where the temperature difference decreases, the controller starts decreasing control for decreasing the frequency of the compressor, when the temperature difference is decreased to a first switch value; and the first switch value in the radiation heating operation is smaller than the first switch value in the warm-air heating operation.

Since the timing of decreasing the frequency in the radiation heating operation is made behind the timing of the same in the warm-air heating operation in the air conditioner, a decrease in the temperature of the radiation heat exchanger is delayed, as compared with a case where the timing is made the same as that in the warm-air heating operation.

Preferably the air conditioner is adapted so that: in cases where the temperature difference decreases, the controller makes switching over from an increasing control which increases the frequency of the compressor to a maintaining control which keeps the frequency of the compressor from varying, when the temperature difference decreases down to the second switch value which is higher than the first switch value, and makes switching over from the maintaining control to the decreasing control, when the temperature difference further decreases down to the first switch value.

In this air conditioner, in cases where the temperature difference between the indoor target temperature and the indoor temperature decreases, the control which decreases the frequency of the compressor is performed after switching over is made from the control which increases the frequency of the compressor to the control which keeps the frequency of the compressor from varying. This allows gradual decrease in the blow-out temperature and the temperature of the radiation heat exchanger, thus achieving a high level of comfort.

Another aspect of the present invention the air conditioner is adapted so that: the second switch value in the radiation heating operation is smaller than the second switch value in the warm-air heating operation.

In this air conditioner, the timing of switching over from the control which increases the frequency to the control for maintaining the frequency in the radiation heating operation is made behind the timing of the same in the warm-air heating operation. This enables delaying of a decrease in the temperature of the radiation heat exchanger, as compared with a case where the timing is made the same as that in the warm-air heating operation.

Preferably the air conditioner is adapted so that: in cases where the temperature difference decreases, the controller makes switching over from an increasing control which increases the frequency of the compressor to the decreasing control which decreases the frequency of the compressor, when the temperature difference decreases down to the first switch value.

In cases where the temperature difference between the indoor target temperature and the indoor temperature decreases, this air conditioner makes switching over from the control which increases the frequency of the compressor to the control which decreases the frequency of the compressor. Therefore, the blow-out temperature is promptly decreased.

Preferably the air conditioner is adapted so that: in cases where the temperature difference increases, the controller starts the increasing control which increases the frequency of the compressor, when the temperature difference increases up to a third switch value; the third switch value in the radiation heating operation is smaller than the third switch value in the warm-air heating operation.

In this air conditioner, the timing of increasing the frequency in the radiation heating operation is made earlier than the timing of the same in the warm-air heating operation. Therefore, the radiation heat exchanger temperature is promptly increased to a high temperature, as compared with a case where the timing is made the same as that in the warm-air heating operation.

In a preferred aspect of the present invention the air conditioner is adapted so that: in cases where the temperature difference increases, the controller makes switching over from the decreasing control which decreases the frequency of the compressor to a maintaining control which keeps the frequency of the compressor from varying, when the temperature difference increases up to a fourth switch value which is smaller than the third switch value, and makes switching over from the maintaining control to the increasing control, when the temperature difference increases up to the third switch value.

In this air conditioner, in cases where the temperature difference between the indoor target temperature and the indoor temperature increases, the control which increases the frequency of the compressor is performed after making switching over from the control which decreases the frequency of the compressor to the control which keeps the frequency of the compressor from varying. This enables gradual increase in the blow-out temperature and the temperature of the radiation heat exchanger, thus achieving a high level of comfort.

Preferably the air conditioner is adapted so that: the fourth switch value in the radiation heating operation is smaller than the fourth switch value in the warm-air heating operation.

In this air conditioner, the timing for making switching over from the control for decreasing the frequency of the radiation heating operation to the control for maintaining the frequency is made earlier than the timing of the same in the warm-air heating operation. Therefore, the temperature of the radiation heat exchanger is promptly heated to a high temperature, as compared with a case where the timing is made the same as that in the warm-air heating operation.

A preferred aspect of the present invention is the air conditioner adapted so that: when the temperature difference increases up to the third switch value, switching over occurs from the decreasing control which decreases the frequency of the compressor to the increasing control which increases the frequency of the compressor.

In cases where the temperature difference between the indoor target temperature and the indoor temperature increases, the air conditioner makes switching over from the control which decreases the frequency of the compressor to the control which increases the frequency of the compressor. Therefore, the blow-out temperature and the temperature of the radiation heat exchanger are promptly increased.

Another preferred aspect of the present invention is the air conditioner adapted so that: the refrigerant circuit includes: a principal channel in which the decompression structure, the outdoor heat exchanger, and the compressor are provided in this order; a first channel having the indoor heat exchanger, which is configured to connect a branching section on the downstream side of the compressor in the principal channel with a merging section provided on the upstream side of the decompression structure, during a heating operation; and a second channel having the radiation heat exchanger, which connects the branching section and the merging section in parallel with the first channel during the heating operation, a valve structure provided in the second channel, between the radiation heat exchanger and the merging section, which is configured to adjust an amount of the refrigerant supplied to the radiation heat exchanger.

This air conditioner allows adjustment of the flow rate of the refrigerant flowing in the radiation heat exchanger and in the indoor heat exchanger, by controlling the valve structure.

Another aspect of the present invention is the air conditioner adapted so that: the indoor unit has a casing which accommodates therein the fan and the indoor heat exchanger, and an upper end portion of the casing has an outlet for blowing out the air.

In this air conditioner, the outlet is provided to the upper end portion of the casing of the indoor unit. Therefore, the indoor unit can be installed at or in the vicinity of the floor surface.

### Advantageous Effects

As hereinabove described, the present invention brings about the following effects.

When the indoor temperature which is far from the indoor target temperature is becoming closer to the indoor target temperature, the timing for decreasing the frequency of the compressor in the radiation heating operation which performs both the warm-air heating and the radiation heating is made behind the timing of the same in the warm-air heating operation which performs only the warm-air heating. This restrains a decrease in the temperature of the radiation heat exchanger, as compared with a case where the timing is made the same as that in the warm-air heating operation. Further, for example, in cases where the indoor temperature close to the indoor target temperature varies to a temperature with more difference from the indoor target temperature, the temperature of the radiation heat exchanger is more promptly brought up to a high temperature by making the timing for increasing the frequency of the compressor in the radiation heating operation earlier than the timing of the same in the warm-air heating operation, as compared with a case where the timing is made the same as that in the warm-air heating operation. This enables maintaining of the temperature of the radiation heat exchanger at a high temperature.

Since the timing of decreasing the frequency in the radiation heating operation is made behind the timing of the same in the warm-air heating operation in the structure according to the invention, a decrease in the temperature of the radiation heat exchanger is delayed, as compared with a case where the timing is made the same as that in the warm-air heating operation.

In the structure of another aspect, in cases where the temperature difference between the indoor target temperature and the indoor temperature decreases, the control which decreases the frequency of the compressor is performed after switching over is made from the control which increases the frequency of the compressor to the control which keeps the frequency of the compressor from varying. This allows gradual decrease in the blow-out temperature and the temperature of the radiation heat exchanger, thus achieving a high level of comfort.

In the structure of another aspect, the timing of switching over from the control which increases the frequency to the control for maintaining the frequency in the radiation heating operation is made behind the timing of the same in the warm-air heating operation. This enables delaying of a decrease in the temperature of the radiation heat exchanger, as compared with a case where the timing is made the same as that in the warm-air heating operation.

In cases where the temperature difference between the indoor target temperature and the indoor temperature decreases, the structure of another aspect makes switching over from the control which increases the frequency of the compressor to the control which decreases the frequency of the compressor. Therefore, the blow-out temperature is promptly decreased.

In the structure of another aspect, the timing of increasing the frequency in the radiation heating operation is made earlier than the timing of the same in the warm-air heating operation. Therefore, the radiation heat exchanger temperature is promptly heated to a high temperature, as compared with a case where the timing is made the same as that in the warm-air heating operation.

In the structure of another aspect, in cases where the temperature difference between the indoor target temperature and the indoor temperature increases, the control which increases the frequency of the compressor is performed after making switching over from the control which decreases the frequency of the compressor to the control which keeps the frequency of the compressor from varying. This enables gradual increase in the blow-out temperature and the temperature of the radiation heat exchanger, thus achieving a high level of comfort.

In the structure of another aspect, the timing for making switching over from the control for decreasing the frequency of the radiation heating operation to the control for maintaining the frequency is made earlier than the timing of the same in the warm-air heating operation. Therefore, the temperature of the radiation heat exchanger is promptly heated to a high temperature, as compared with a case where the timing is made the same as that in the warm-air heating operation.

In cases where the temperature difference between the indoor target temperature and the indoor temperature increases, the structure of another aspect makes switching over from the control which decreases the frequency of the compressor to the control which increases the frequency of the compressor. Therefore, the blow-out temperature and the temperature of the radiation heat exchanger are promptly increased.

The structure of another aspect allows adjustment of the flow rate of the refrigerant flowing in the radiation heat exchanger and in the indoor heat exchanger, by controlling the valve structure.

In the structure of another aspect, the outlet is provided to the upper end portion of the casing of the indoor unit. Therefore, the indoor unit can be installed at or in the vicinity of the floor surface.

### Brief Description of Drawings

[FIG. 1] FIG. 1 is a circuit diagram showing a schematic configuration of an air conditioner related to an embodiment of the present invention, and shows a flow of a refrigerant during a cooling operation and during a warm-air heating operation.
[FIG. 2] FIG. 2 is a circuit diagram showing a schematic configuration showing the air conditioner related to the embodiment of the present invention, and shows a flow of the refrigerant during the radiation heating operation.
[FIG. 3] FIG. 3 is a block diagram showing a schematic configuration of a controller for controlling the air conditioner.
[FIG. 4] FIG. 4 is a perspective view of an indoor unit.
[FIG. 5] FIG. 5 is a cross sectional view taken along the line V-V in FIG. 4.
[FIG. 6] FIG. 6(a) is a diagram for explaining a control of a compressor during the warm-air heating operation, FIG. 6 (b) is a diagram for explaining a control of the compressor during the warm-air heating operation.
[FIG. 7] FIG. 7 is a graph showing variation in the frequency of the compressor in cases where the indoor temperature increases during the radiation heating operation increases, and shows an example where the compressor is controlled as shown in FIG. 6 (b), and an example where the compressor is controlled as shown in FIG. 6(a).
[FIG. 8] FIG. 8 is a graph showing variation in the frequency of the compressor when the indoor temperature drops during the radiation heating operation, and shows an example where an example where the compressor is controlled as shown in FIG. 6 (b), and an example where the compressor is controlled as shown in FIG. 6(a).
[FIG. 9] FIG. 9 is a graph showing operations of each unit of the air conditioner during an operation under a first radiation operation mode, and showing the indoor temperature and the radiation heat exchanger temperature.
[FIG. 10] FIG. 10 is a graph showing operations of each unit of the air conditioner during an operation under second radiation operation mode, and showing the indoor temperature and the radiation heat exchanger temperature.
[FIG. 11] FIG. 11 is a graph showing variation in the frequency of the compressor when the indoor temperature drops during the radiation heating operation, and shows an example where the compressor is controlled as shown in FIG. 6 (b) and an example where the compressor is controlled as shown in FIG. 6(a).

### Description of Embodiments

The following describes an air conditioner 1 related to an embodiment of the present invention.

### <Overall Structure of Air Conditioner 1>

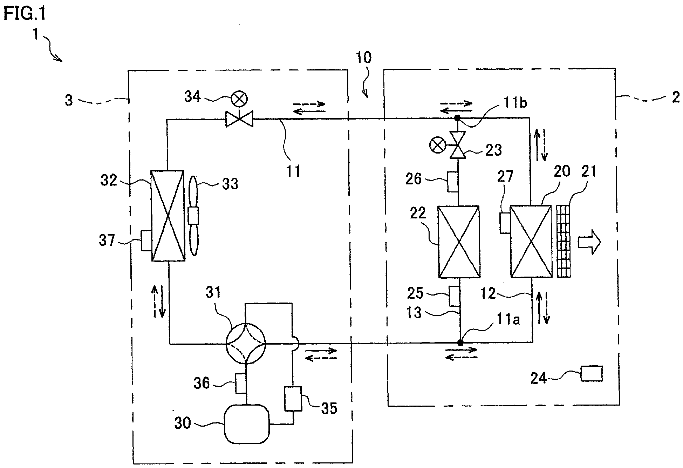

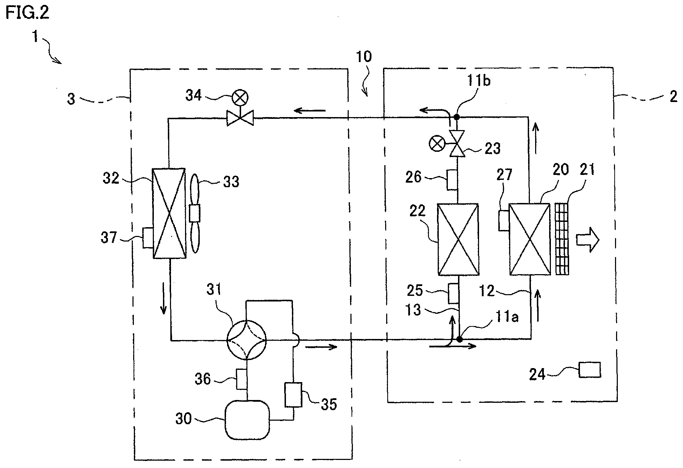

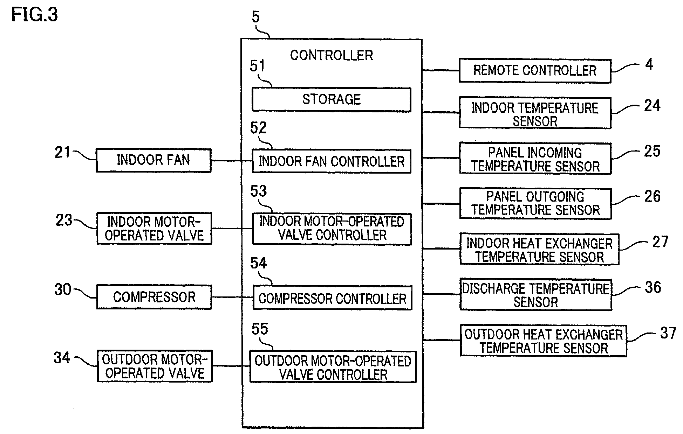

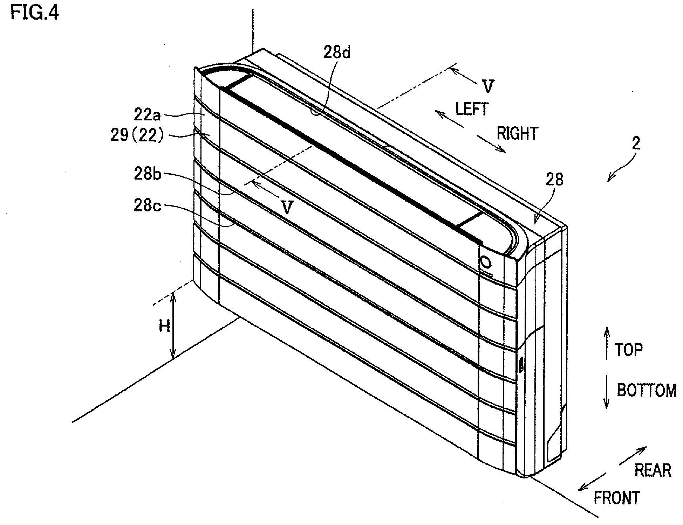

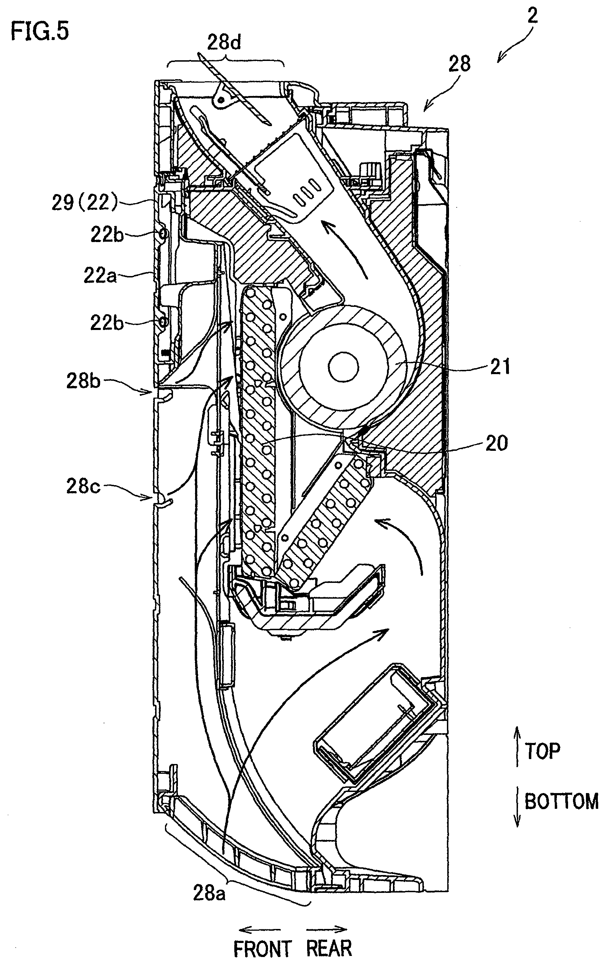

As shown in FIG. 1 and FIG. 2, an air conditioner 1 of the embodiment includes: an indoor unit 2 installed inside a room, an outdoor unit 3 installed outside the room, and a remote controller 4 (see FIG. 3). The indoor unit 2 has an indoor heat exchanger 20, an indoor fan 21 disposed nearby the indoor heat exchanger 20, a radiation heat exchanger 22 provided to a radiation panel 29 (see FIG. 4 and FIG. 5), an indoor motor-operated valve (valve structure) 23, and an indoor temperature sensor 24 for detecting the indoor temperature. Further, the outdoor unit 3 has a compressor 30, a four-way valve 31, an outdoor heat exchanger 32, an outdoor fan 33 disposed nearby the outdoor heat exchanger 32, and an outdoor motor-operated valve (decompression structure) 34. The indoor unit 2 and the outdoor unit 3 are connected to each other via an annular refrigerant circuit 10. The refrigerant circuit 10 includes a principal channel 11, a first channel 12, and a second channel 13.

In the principal channel 11 are provided the outdoor motor-operated valve 34, the outdoor heat exchanger 32, and the compressor 30 in this order. The principal channel 11 further includes the four-way valve 31, and by switching this four-way valve 31, one of the discharge side and the intake side of the compressor 30 is connected to the outdoor heat exchanger 32. Between the intake side of the compressor 30 and the four-way valve 31 in the principal channel 11, there is an accumulator 35. Between the discharge side of the compressor 30 and the four-way valve 31 in the principal channel 11, there is a discharge temperature sensor 36. To the outdoor heat exchanger 32 is provided an outdoor heat exchanger temperature sensor 37. The outdoor motor-operated valve 34 functions as a decompression structure, and its opening degree is variable. Further, in cases where the intake side of the compressor 30 is connected to the outdoor heat exchanger 32 (heating operation shown in FIG. 2), there is a branching section 11a on the downstream side of the compressor 30 in the principal channel 11, and a merging section 11b on the upstream side of the outdoor motor-operated valve 34.

The first channel 12 and the second channel 13 are provided between the branching section 11a and the merging section 11b, and are connected in parallel. The first channel 12 is provided with the indoor heat exchanger 20, and the second channel 13 is sequentially provided with a radiation heat exchanger 22 and the indoor motor-operated valve 23 from the side of the branching section 11a. In the refrigerant circuit 10 of the embodiment, the channel between the branching section 11a and the merging section 11b, i.e., channel excluding the first channel 12 and the second channel 13, is a principal channel.

As shown in FIG. 4, the indoor unit 2 of the embodiment has a rectangular solid shape, and is installed to a wall surface, while being slightly above the floor surface of the room. In the embodiment, the distance H (see FIG. 4) of the indoor unit 2 from the floor surface is approximately 10 cm. As shown in FIG. 5, the indoor unit 2 has a casing 28 which accommodates the indoor fan 21 and the indoor heat exchanger 20 or the like. A part of the front surface of the casing 28 is structured by the radiation panel 29. On the lower wall of the casing 28 is formed a principal inlet 28a. On the front wall of the casing 28 are formed auxiliary inlets 28b and 28c. On the upper wall of the casing 28 is formed an outlet 28d.

As shown in FIG. 5, the indoor heat exchanger 20 is provided inside the indoor unit 2 so as to oppose to the indoor fan 21, and is disposed on a windward side of the indoor fan 21. This indoor unit 2, when the indoor fan 21 is driven, draws in the air in the vicinity of the floor surface through the principal inlet 28a and also draws in the air from the auxiliary inlets 28b and 28c. The air having been drawn in is heated or cooled in the indoor heat exchanger 22, and then blown into the room from the outlet 28d formed on the upper wall of the casing 28, thus performing cooling or warm-air heating. Further, as shown in FIG. 1 and FIG. 2, the indoor heat exchanger 20 is provided with an indoor heat exchanger temperature sensor 27.

The radiation panel 29 is arranged on a surface of the indoor unit 2. The radiation panel 29 includes: a radiation plate 22a which constitutes a part of the surface of the indoor unit 2, a U-shaped pipe fitting 22b fixed to the back surface side of the radiation plate 22a, through which the refrigerant flows; and a connection pipe fitting (not-shown) configured to supply the refrigerant to the pipe fitting 22b. Note that the radiation heat exchanger 22 is structured by the radiation plate 22a and the pipe fitting 22b. The indoor unit 2 performs radiation heating by causing the heat of the refrigerant flowing in the pipe fitting 22b to radiate in the room through the radiation plate 22a. As shown in FIG. 1 and FIG. 2, on both ends of the radiation heat exchanger 22 in the second channel 13 , a panel incoming temperature sensor 25 and the panel outgoing temperature sensor 26 are provided, respectively.

The indoor motor-operated valve 23 is provided for adjusting the flow rate of the refrigerant to be supplied to the radiation heat exchanger 22. The indoor motor-operated valve 23 is provided on the downstream side of the radiation heat exchanger 22, relative to the flow direction of the refrigerant during a radiation heating operation and a radiation breeze-heating operation which are described hereinafter.

The air conditioner 1 of the embodiment is capable of performing a cooling operation, a warm-air heating operation, and a radiation heating operation. The cooling operation is an operation to perform cooling by causing the refrigerant to flow not in the radiation heat exchanger 22, but in the indoor heat exchanger 20. The warm-air heating operation is an operation to perform warm-air heating by causing the refrigerant to flow not in the radiation heat exchanger 22, but in the indoor heat exchanger 20. The radiation heating operation is an operation to perform radiation heating by causing the refrigerant to flow in the indoor heat exchanger 20 to perform the warm-air heating while causing the refrigerant to also flow in the radiation heat exchanger 22 to perform radiation heating.

The remote controller 4 allows the user to start/stop the operation, set an operation mode, set a target indoor temperature (indoor target temperature), set a blowing air quantity. As shown in Table 1, the air conditioner 1 of the embodiment allows selecting of the cooling operation mode or the heating operation mode as the main operation mode, by operating the remote controller 4. Selecting the heating operation mode as the main operation mode further enables selecting of a warm-air heating operation mode, or one of a first radiation operation mode and a second radiation operation mode in the radiation heating operation modes, as shown in Table 1.

**[Table 1]**

| Cooling operation mode | | | Cooling operation |
|---|---|---|---|
| Heating operation mode | Warm-air heating operation mode | | Warm-air heating operation |
| | Radiation heating operation mode | First radiation operation mode | Radiation heating operation (Blowing air quantity varied according to indoor temperature) |
| | | Second radiation operation mode | Radiation heating operation (Fixed small blowing air quantity) |

As shown in Table 1, the cooling operation mode is a mode for performing the cooling operation. The warm-air heating operation mode is a mode for performing the warm-air heating operation. The first radiation operation mode is a mode for performing radiation heating operation such that the blowing air quantity is varied according to the indoor temperature. The second radiation operation mode is a mode for performing the radiation heating operation such that the blowing air quantity is lower than that of the warm-air heating operation but is constant. The air volume is automatically controlled when the first radiation operation mode or the second radiation operation mode is selected. When the warm-air heating operation mode or the cooling operation mode is selected, setting of the air volume is selectable from "Air Volume-Auto" , "Strong", and "Weak" by operating the remote controller 4.

### <Controller 5>

Next, the following describes a controller 5 which controls the air conditioner 1, with reference to FIG. 3.

As shown in FIG. 3, the controller 5 has a storage 51, an indoor fan controller 52, an indoor motor-operated valve controller 53, a compressor controller 54, and an outdoor motor-operated valve controller 55. The controller 5, during the heating operation, automatically stops operation (thermo-off state) when the indoor temperature is higher than the indoor target temperature by a predetermined degree(s) (in the embodiment, when the difference ΔT_{R} between the indoor target temperature and the indoor temperature is -2.0 or smaller). Then, when the room temperature drops and becomes lower than the indoor target temperature by a predetermined degrees (in the embodiment, when the difference ΔT_{R} between the indoor target temperature and the indoor temperature is -2.0°C or greater), the controller 5 resumes the operation (thermo-on state). Note that the difference ΔT_{R} in the temperatures is a value resulting by subtracting the indoor temperature from the indoor target temperature. As such, when the indoor temperature is higher than the indoor target temperature, the value becomes a negative value. Note that the indoor temperature to become the thermo-off state and the indoor temperature to become the thermo-on state are not limited to those described above.

### (Storage 51)

The storage 51 stores therein various operational settings related to the air conditioner 1, a control program, and a data table necessary for executing the control program. The operational settings including those set by a user operating the remote controller 4 such as the target indoor temperature, and those which are set in advance in the air conditioner 1. In the air conditioner 1 of the embodiment, the target temperature range of the radiation heat exchanger 22 is set to a predetermined temperature range (e.g. , 50 to 55°C). Note that the target temperature range of the radiation heat exchanger 22 may be settable by operation of the remote controller 4.

### (Indoor Fan Controller 52)

The indoor fan controller 52 controls the rotational frequency of the indoor fan 21.

Table 2 shows fan taps selectable during the warm-air heating operation mode with the auto air volume setting, the first radiation operation mode, and the second radiation operation mode, and rotational frequencies corresponding to the fan taps, respectively.

**[Table 2]**

| | | Fan tap | rotational frequency |
|---|---|---|---|
| Warm-air heating operation mode (Auto blowing air quantity) | | A1 | a1 |
| | | A2 | a2 |
| | | A3 | a3 |
| | | A4 | a4 |
| | | A5 | a5 |
| First radiation operation mode | First air volume control | B1 | b1 |
| | | B2 | b2 |
| | | B3 | b3 |
| | | B4 | b4 |
| | | B5 | b5 |
| | | B6 | b6 |
| | | B7 | b7 |
| | Second air volume control | C1 | c1 |
| Second radiation operation mode | | C1 | c1 |

| | | | |
|---|---|---|---|
| * c1 < a5 < a4 < a3 < a2 < a1 * c1 < b7 < b6 < b5 < b4 < b3 < b2 < b1 | | | |

During the warm-air heating operation with the auto air volume setting, the indoor fan controller 52 selects any of the five stages of fan taps A1 to A5 shown in Table 2, based on the difference Δ_{R} between the indoor target temperature and the indoor temperature, and controls the indoor fan 21 so that the rotational frequency of the indoor fan 21 is any of the rotational frequencies (a1 to a5) corresponding to the fan tap. Further, when any of the air volumes from the "Strong" to "Weak" is selected during the warm-air heating operation, the indoor fan controller 52 controls the indoor fan 21 so as to make its rotational frequency to a constant rotational frequency set in advance.

Further, during the second radiation operation mode, the indoor fan controller 52 controls the indoor fan 21 so that its rotational frequency is a constant rotational frequency c1 which is lower than the rotational frequencies a1 to a5 during the warm-air heating operation. The rotational frequency c1 is a value such that the rotation of the indoor fan 21 at the frequency generates almost no sound and a user feels almost no draft.

Further, when an operation to start the first radiation operation mode is conducted, the indoor fan controller 52 starts a first air volume control, when the temperature difference ΔT_{R} between the indoor target temperature and the indoor temperature is greater than the 0°C. When the temperature difference ΔT_{R} is 0°C or lower, the indoor fan controller 52 starts a second air volume control.

The second air volume control is the same as the control performed during the second radiation operation mode, and the rotational frequency of the indoor fan 21 is set to a rotational frequency c1 which is a constant frequency lower than the rotational frequencies a1 to a5 during the warm-air heating operation.

In the first air volume control, any of the seven stages of fan taps B1 to B7 as shown in Table 2 is selected, based on the difference ΔT_{R} between the indoor target temperature and the indoor temperature, and the rotational frequency of the indoor fan 21 is controlled so as to be any of the rotational frequencies (b1 to b7) corresponding to the fan tap. The number of fan taps (B1 to B7) during the first air volume control is greater than the number of fan taps (a1 to a5) during the warm-air heating operation. Therefore, during the first air volume control, the rotational frequency of the indoor fan 21 has more variations. This reduces sound generated by the rotation of the indoor fan 21 when shifting occurs from the first air volume control to the second air volume control.

When the temperature difference ΔT_{R} between the indoor target temperature and the indoor temperature becomes 0°C or smaller during the first air volume control, the indoor fan controller 52 makes switching over from the first air volume control to the second air volume control. Further, when the temperature difference ΔT_{R} between the indoor target temperature and the indoor temperature becomes a predetermined value D1 (e.g., 0°C) during the second air volume control, the indoor fan controller 52 makes switching over from the second air volume control to the first air volume control.

### (Indoor Motor-Operated Valve Controller 53)

The indoor motor-operated valve controller 53 controls the opening degree of the indoor motor-operated valve 23. Table 3 shows control status of operations under various modes of the heating operation. As shown in Table 3, during the warm-air heating operation, the indoor motor-operated valve controller 53 closes the indoor motor-operated valve 23.

**[Table 3]**

| | Indoor motor-operated valve |
|---|---|
| Warm-air heating operation mode | Fully closed |
| First radiation operation mode | Opening degree controlled according to radiation heat exchanger temperature |
| Second radiation operation mode | Opening degree controlled according to radiation heat exchanger temperature |

Further, as shown in Table 3, the indoor motor-operated valve controller 53 controls the opening degree of the indoor motor-operated valve 23 based on the temperature of the radiation heat exchanger 22, during the radiation heating operation (during operations in the first radiation operation mode or the second radiation operation mode). Specifically, a predicted temperature value of the radiation plate 22a of the radiation heat exchanger 22 (hereinafter, radiation heat exchanger temperature) is calculated based on temperatures detected by the panel incoming temperature sensor 25 and the panel outgoing temperature sensor 26, and the opening degree of the indoor motor-operated valve 23 is controlled so that the radiation heat exchanger temperature becomes a target temperature range (e.g., 50 to 55°C). When the radiation heat exchanger temperature is lower than the predetermined temperature (e.g., 51°C) within the target temperature range, the indoor motor-operated valve controller 53 performs control to increase the opening degree of the indoor motor-operated valve 23. However, the indoor motor-operated valve controller 53 keeps the opening degree of the indoor motor-operated valve 23 at an initial opening degree, until a predetermined time t1 elapses from the beginning of the radiation heating operation.

Note that the embodiment uses both of the temperature detected by the panel incoming temperature sensor 25 and the temperature detected by the panel outgoing temperature sensor 26 to calculate the radiation heat exchanger temperature; however, it is possible to use only the temperature detected by the panel incoming temperature sensor 25, or use only the temperature detected by the panel outgoing temperature sensor 26.

### (Compressor Controller 54)

The compressor controller 54 controls the operational frequency of the compressor 30.

The compressor controller 54 controls the frequency of the compressor 30 based on the temperature difference ΔT_{R} between the indoor target temperature and the indoor temperature, during the warm-air heating operation and during the radiation heating operation (operations in the first radiation operation mode or the second radiation operation mode).

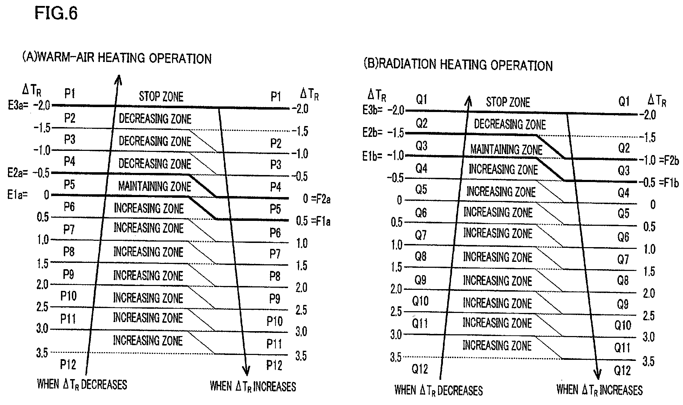

As hereinafter detailed, the compressor controller 54 selects any of zones (P1 to P12 or Q1 to Q12) shown in FIG. 6, based on the temperature difference ΔT_{R}, and executes a control operation (compressor stopping, decreasing control, maintaining control, increasing control) which is set for each of the zones. FIG. 6(a) shows zones selectable during the warm-air heating operation, and FIG. 6 (b) shows zones selectable during the radiation heating operation. Further, the left sides of the FIG. 6 (a) and FIG. 6 (b) show a zone where the temperature difference ΔT_{R} decreases; i.e., a zone where the indoor temperature increases. The right sides of FIG. 6 (a) and FIG. 6 (b) show a zone where the temperature difference ΔT_{R} increases; i.e., a zone where the indoor temperature drops.

First, the following describes, with reference to the left side of the FIG. 6(a), a case where the temperature difference ΔT_{R} decreases during the warm-air heating operation.

When the temperature difference ΔT_{R} is greater than the predetermined value E1a=0°C (second switch value), the compressor controller 54 selects any of increasing zones P6 to P12, and increases the frequency of the compressor 30 by an amount set for each zone (increasing control). However, when the frequency of the compressor 30 becomes close to the upper limit frequency, the compressor controller 54 controls the frequency of the compressor 30 so as not to exceed the upper limit frequency. Note that the upper limit frequency of the compressor 30 is an upper limit value of the frequency such that the pressure in the refrigerant circuit 10 does not become abnormally high pressure. The "decreasing control" in the present invention means a control in which the decreasing zone is selected and the frequency of the compressor is decreased based on the temperature difference between the indoor target temperature and the indoor temperature. The decreasing control of the present invention does not include a control that, when the increasing zone or the maintaining zone is selected, decreases the frequency of the compressor 30 so as not to exceed the upper limit frequency of the compressor 30. When comparing an increasing zone and another increasing zone, with the temperature difference ΔTR of one of the two increasing zones being greater than the other, the amount of increase in the frequency which is set for each of the increasing zones is greater in the increasing zone with the greater temperature difference ΔTR than it is in the other. For example, the amount of increase in the frequency set for the increasing zone P12 is greater than the amount of increase in the frequency set for the increasing zone P6.

When the temperature difference ΔT_{R} is greater than a predetermined value E2a=-0.5°C (first switch value) but not more than E1a=0°C, the compressor controller 54 selects a maintaining zone P5 and maintains the frequency of the compressor 30 without changing (maintaining control).

Further, when the temperature difference ΔT_{R} is greater than a predetermined value E3a=-2.0 but not more than E2a=-0.5°C, the compressor controller 54 selects any of the decreasing zone P2, P3, and P4, and then decreases the frequency of the compressor 30 by an amount of decrease which is set for each of the zones (decreasing control). When comparing a decreasing zone with another decreasing zone, with the temperature difference TR of one of the two decreasing zones being smaller than the other, the amount of decrease in the frequency is greater in the decreasing zone with the smaller temperature difference ΔTR than it is in the other. For example the amount of decrease in the frequency set for the decreasing zone P2 is greater than the amount of decrease in the frequency set for the decreasing zone P4.

Further, when the temperature difference ΔT_{R} is not more than E3a=-2.0°C, the compressor controller 54 selects stop zone P1, and stop the operation of the compressor 30 (thermo-off).

Further, when the operation is started by using the remote controller 4, the compressor controller 54 resumes operation of the compressor 30 at an initial frequency which is set in advance according to the temperature difference ΔT_{R}. Then, according to the temperature difference ΔT_{R} at the time of starting the operation, a zone on the left side of the FIG. 6(a) is selected, and the frequency of the compressor 30 is controlled according to the selected zone. When any of the increasing zones P6 to P12 is selected, the frequency is increased from the initial frequency by the amount of increase set for each of the zones. When any of the decreasing zones P2, P3, and P4 is selected, the frequency is reduced from the initial frequency by the amount of decrease set for each of the zones. When the maintaining zone P5 is selected, the initial frequency is maintained.

Next, the following describes, with reference to FIG. 6(a), a case where the temperature difference ΔT_{R} increases during the warm-air heating operation.

After thermo-off occurs and the operation of the compressor 30 is stopped, the temperature difference ΔT_{R} increases. When the temperature difference ΔT_{R} becomes greater than -2.0°C, the compressor controller 54 selects the zone P2, and resumes operation of the compressor 30 at the initial frequency which is set in advance. The zone P2 serves as the decreasing zone and also serves as a recovery zone in which operation of the compressor 30 is resumed. After thermo-off occurs and the operation of the compressor 30 is stopped, the operation of the compressor 30 is kept stopped while the temperature difference ΔT_{R} is not more than -2.0°C.

When the temperature difference ΔT_{R} becomes greater than E3a=-2.0°C but not more than -1.0°C while the compressor 30 is operated, the compressor controller 54 selects the decreasing zone P2 and decreases the frequency of the compressor 30 by an amount of decrease corresponding to the decreasing zone P2(decreasing control).

When the temperature difference ΔT_{R} is greater than -1.0°C but not more than a predetermined value F2a=0°C (fourth switch value), the compressor controller 54 selects any of the decreasing zones P3 and P4, and decreases the frequency of the compressor 30 by an amount of decrease set for each of the zones (decreasing control).

When the temperature difference ΔT_{R} is greater than F2a=0°C but not more than predetermined value F1a=0.5°C (third switch value), the compressor controller 54 selects the maintaining zone P5 and maintains the frequency of the compressor 30 without variation (maintaining control).

When the temperature difference ΔT_{R} is greater than F1a=0.5°C, the compressor controller 54 selects any of the increasing zones P6 to P12 and increases the frequency of the compressor 30 by an amount of increase set for each of the zones (increasing control). However, as in the case where the temperature difference ΔT_{R} is reduced, the compressor controller 54 controls the frequency of the compressor 30 so as not to exceed the upper limit frequency, when the frequency of the compressor 30 becomes close to the upper limit frequency.

In the embodiment, the compressor controller 54 selects a zone based on the actual temperature difference ΔT_{R} and controls the frequency of the compressor 30, during the warm-air heating operation.

Next, the following describes, with reference to the left side of FIG. 6(b), a case where the temperature difference ΔT_{R} decreases during the radiation heating operation.

When the temperature difference ΔT_{R} is greater than the predetermined value E1a=-1.0 °C (second switch value), the compressor controller 54 selects any of increasing zones Q4 to Q12, and increases the frequency of the compressor 30 by an amount of increase set for each zone (increasing control). However, as in the case of warm air heating operation, the compressor controller 54 controls the frequency of the compressor 30 so as not to exceed the upper limit frequency, when the frequency of the compressor 30 becomes close to the upper limit frequency. When comparing an increasing zone and another increasing zone, with the temperature difference ΔTR of one of the two increasing zones being greater than the other, the amount of increase in the frequency which is set for each of the increasing zones is greater in the increasing zone with the greater temperature difference ΔTR than it is in the other. When the temperature difference ΔTR is greater than a predetermined value E2b=-1.5°C (first switch value) but not more than E1b = -1.0°C, the compressor controller 54 selects a maintaining zone Q3 and maintains the frequency of the compressor 30 without changing (maintaining control).

Further, when the temperature difference ΔT_{R} is greater than a predetermined value E3b=-2.0°C but not more than E2b=-1.5°C, the compressor controller 54 selects any of the decreasing zone Q2, and then decreases the frequency of the compressor 30 (decreasing control).

Further, when the temperature difference ΔT_{R} is not more than E3b=-2.0°C, the compressor controller 54 selects stop zone Q1, and stop the operation of the compressor 30 (thermo-off).

Further, when the operation is started by using the remote controller 4, the compressor controller 54 selects a zone on the left side of FIG. 6(b), according to the temperature difference ΔT_{R}.

Further, when the operation is started by using the remote controller 4, the compressor controller 54 resumes operation of the compressor 30 at an initial frequency which is set in advance according to the temperature difference ΔT_{R}. Then, according to the temperature difference ΔT_{R} at the time of starting the operation, a zone on the left side of the FIG. 6(b) is selected, and the frequency of the compressor 30 is controlled according to the selected zone. When any of the increasing zones Q4 to Q12 is selected, the frequency is increased from the initial frequency by the amount of increase set for each of the zones. When the decreasing zone Q2 is selected, the frequency is reduced from the initial frequency by the amount of decrease set for each of the zones. When the maintaining zone Q3 is selected, the initial frequency is maintained.

In the embodiment, when the temperature difference ΔT_{R} is greater than E1b=-1.0°C (second switch value) at the time when the temperature difference ΔT_{R} of the radiation heating operation is decreased (including the time when the operation is started), the frequency of the compressor 30 is controlled based on a pseudo temperature, instead of the actual temperature difference ΔT_{R}. When the temperature difference ΔT_{R} is not more than E1b, the frequency of the compressor 30 is controlled based on the actual temperature difference ΔT_{R}. Therefore, when the temperature difference Δ_{R} is greater than E1b, the compressor controller 54 selects a zone based on the pseudo temperature, instead of the actual temperature difference ΔT_{R}. The pseudo temperature is set to a relatively great value (e.g., 3.0 to 3.5°C) so that an increasing zone corresponding to a large amount of increase in the frequency is selected. When the frequency of the compressor 30 is increased by an amount of increase corresponding to the increasing zone selected based on the pseudo temperature, the frequency of the compressor 30 quickly increases. When the frequency of the compressor 30 becomes close to the upper limit frequency, the frequency is controlled so as not to exceed the upper limit frequency. In the embodiment, when the temperature difference ΔT_{R} is greater than E1b, the frequency of the compressor 30 is controlled so as to be nearby the upper limit frequency (at the upper limit frequency or a value slightly smaller than the upper limit frequency). Therefore, a radiation heating with a high heating performance is possible. Further, when the temperature difference ΔT_{R} is reduced to E1b, the compressor controller 54 selects the maintaining zone Q3 based on the actual temperature difference ΔT_{R}, and maintains the frequency of the compressor 30.

As described, the compressor controller 54 makes switching over between the control based on the pseudo temperature and that based on the actual temperature difference ΔT_{R}, according to the temperature difference ΔT_{R}.

Next, the following describes, with reference to FIG. 6(b), a case where the temperature difference ΔT_{R} increases during the radiation heating operation.

After thermo-off occurs and the operation of the compressor 30 is stopped, the temperature difference ΔT_{R} increases. When the temperature difference ΔT_{R} becomes greater than -2.0°C, the compressor controller 54 selects the zone Q2, and resumes operation of the compressor 30 at the initial frequency which is set in advance. The zone Q2 serves as the decreasing zone and also serves as a recovery zone in which operation of the compressor 30 is resumed. After thermo-off occurs and the operation of the compressor 30 is stopped, the operation of the compressor 30 is kept stopped while the temperature difference ΔT_{R} is not more than -2.0°C.

When the temperature difference ΔT_{R} is greater than E3b=-2.0°C but not more than predetermined value F2b=-1.0°C (fourth switch value) while the compressor 30 is operated, the compressor controller 54 selects the decreasing zone Q2 and decreases the frequency of the compressor 30 (decreasing control).

When the temperature difference ΔT_{R} is greater than F2b= -1.0°C but not more than predetermined value F1b=-0.5°C (third switch value), the compressor controller 54 selects the maintaining zone Q3 and maintains the frequency of the compressor 30 without variation (maintaining control).

When the temperature difference ΔT_{R} is greater than F1b = -0.5°C, the compressor controller 54 selects any of the increasing zones Q4 to Q12 and increases the frequency of the compressor 30 by an amount of increase set for each of the zones (increasing control). However, when the frequency of the compressor 30 becomes close to the upper limit frequency, the compressor controller 54 controls the frequency of the compressor 30 so as not to exceed the upper limit frequency.

In the embodiment, when the temperature difference ΔT_{R} is greater than F1b=-0.5°C (third switch value) at the time when the temperature difference ΔTR of the radiation heating operation is increased, the frequency of the compressor 30 is controlled based on a pseudo temperature, instead of the actual temperature difference ΔTR, as is the case where the temperature difference ΔT_{R} is decreased. When the temperature difference ΔTR is not more than F1b, the frequency of the compressor 30 is controlled based on the actual temperature difference ΔTR, as is the case where the temperature difference ΔT_{R} is decreased.

Thus, when the temperature difference ΔT_{R} is not more than F1b, the compressor controller 54 selects any of the maintaining zone Q3, the decreasing zone Q2, and stop zone Q1 based on the actual temperature difference ΔT_{R}, and controls the compressor 30.

When the temperature difference ΔT_{R} is greater than F1b, the compressor controller 54 selects a zone based on the pseudo temperature, instead of the actual temperature difference ΔT_{R}. The pseudo temperature is set to a relatively great value (e.g. , 3.0 to 3.5°C) so that an increasing zone corresponding to a large amount of increase in the frequency is selected. When the frequency of the compressor 30 is increased by an amount of increase corresponding to the increasing zone selected based on the pseudo temperature, the frequency of the compressor 30 quickly increases. When the frequency of the compressor 30 becomes close to the upper limit frequency, the frequency is controlled so as not to exceed the upper limit frequency. In the embodiment, when the temperature difference ΔT_{R} is greater than F1b, the frequency of the compressor 30 is controlled so as to be nearby the upper limit frequency (at the upper limit frequency or a value slightly smaller than the upper limit frequency). Therefore, a radiation heating with a high heating performance is possible.

As described, the compressor controller 54 makes switching over between the control based on the pseudo temperature and that based on the actual temperature difference ΔT_{R}, according to the temperature difference ΔT_{R}.

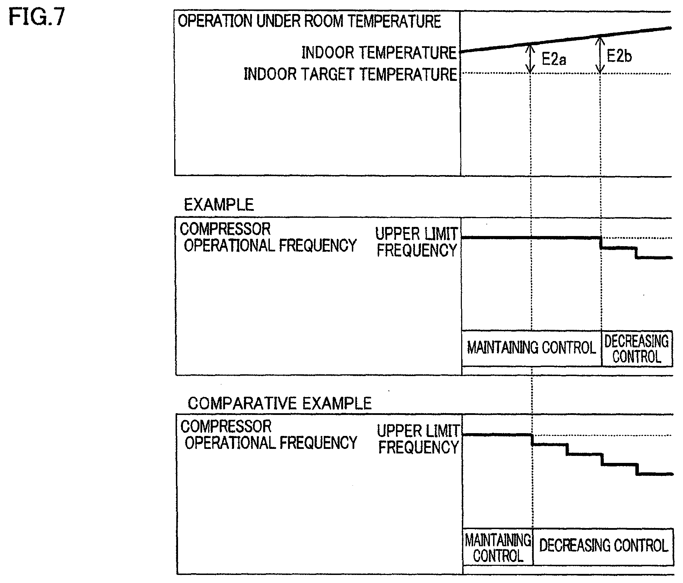

FIG. 7 shows the frequency of the compressor 30 in the embodiment, in a case where the temperature difference ΔT_{R} during the radiation heating operation is decreasing (example shown in FIG. 7), and a frequency of the compressor 30 in a case where compressor 30 is controlled as shown in FIG. 6(a) instead of FIG. 6(b), and the other controls are the same as those of the radiation heating operation of the embodiment (comparative example shown in FIG. 7).

E2b=-1.5°C which is the temperature difference ΔT_{R} at which switching from the maintaining zone Q3 to the decreasing zone Q2 shown in FIG. 6(b) occurs in cases where the temperature difference ΔT_{R} is decreasing is smaller than E2a=-0.5°C which is the temperature difference ΔT_{R} at which switching from the maintaining zone P5 to decreasing zone P4 shown in FIG. 6(a) occurs.

Therefore, switching over from the maintaining zone Q3 to the decreasing zone Q2 occurs at a timing that is behind a timing at which switching from the maintaining zone P5 to the decreasing zone P4 occurs, when the condition of the temperature difference ΔT_{R} is the same.

Thus, as shown in FIG. 7, in the radiation heating operation of the embodiment in which the compressor 30 is controlled based on FIG. 6(a), it takes longer time before switching over from the maintaining control to the decreasing control occurs; i. e. , the timing of decreasing the frequency of the compressor 30 is delayed, as compared with the cases where the compressor 30 is controlled based on FIG. 6 (a) as in the case of the warm-air heating operation. Since a decrease in the radiation heat exchanger temperature is delayed, the radiation heat exchanger temperature is maintained at a high temperature.

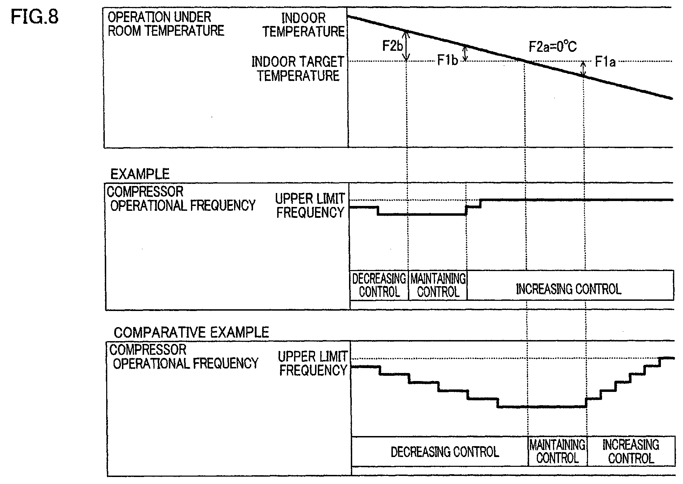

FIG. 8 shows the frequency of the compressor 30 in the embodiment, in a case where the temperature difference ΔT_{R} during the radiation heating operation is increasing (example shown in FIG. 8), and a frequency of the compressor 30 in a case where compressor 30 is controlled as shown in FIG. 6(a) instead of FIG. 6 (b) , and the other controls are the same as those of the radiation heating operation of the embodiment (comparative example shown in FIG. 8).

F2b=-1.0°C which is the temperature difference ΔT_{R} at which switching from the decreasing zone Q2 to the maintaining zone Q3 shown in FIG. 6(b) occurs in cases where the temperature difference ΔT_{R} is increasing is smaller than F2a= 0°C which is the temperature difference ΔT_{R} at which switching from decreasing zone P4 to the maintaining zone P5 shown in FIG. 6(a) occurs.

Therefore, switching over from the decreasing zone Q2 to the maintaining zone Q3 occurs at a timing that is behind a timing at which switching from the decreasing zone P4 to the maintaining zone P5 occurs, when the condition of the temperature difference ΔT_{R} is the same.

Thus, as shown in FIG. 8, in the radiation heating operation of the embodiment in which the compressor 30 is controlled based on FIG. 6(a), it takes shorter time before switching over from the decreasing control to the maintaining control occurs, as compared with the cases where the compressor 30 is controlled based on FIG. 6(a) as in the case of the warm-air heating operation. Since a decrease in the radiation heat exchanger temperature is restrained earlier, the radiation heat exchanger temperature is maintained at a high temperature.

F1b=-0.5°C which is the temperature difference ΔT_{R} at which switching from the maintaining zone Q3 to the increasing zone Q4 shown in FIG. 6(b) occurs in cases where the temperature difference ΔT_{R} is increasing is smaller than F1a= 0.5°C which is the temperature difference ΔT_{R} at which switching from the maintaining zone P5 shown in FIG. 6(a) occurs.

Therefore, switching over from the maintaining zone Q3 to the increasing zone Q4 occurs at a timing that is behind a timing at which switching from the maintaining zone P5 to the increasing zone P6 occurs, when the condition of the temperature difference ΔT_{R} is the same.

Thus, as shown in FIG. 8, in the radiation heating operation of the embodiment in which the compressor 30 is controlled based on FIG. 6(a) , it takes shorter time before switching over from the maintaining control to the increasing control occurs; i. e. , the frequency of the compressor 30 is increased earlier, as compared with the cases where the compressor 30 is controlled based on FIG. 6(a) as in the case of the warm-air heating operation. Since the radiation heat exchanger temperature is promptly raised to a high temperature, the radiation heat exchanger temperature is maintained at a high temperature.

### (Outdoor Motor-Operated Valve Controller 55)

The outdoor motor-operated valve controller 55 controls the opening degree of the outdoor motor-operated valve 34, based on the temperature difference ΔT_{R} between the indoor target temperature and the indoor temperature.

### <Operation of Air conditioner 1>

Next, the following describes an operation of the air conditioner 1 in the heating operation mode.

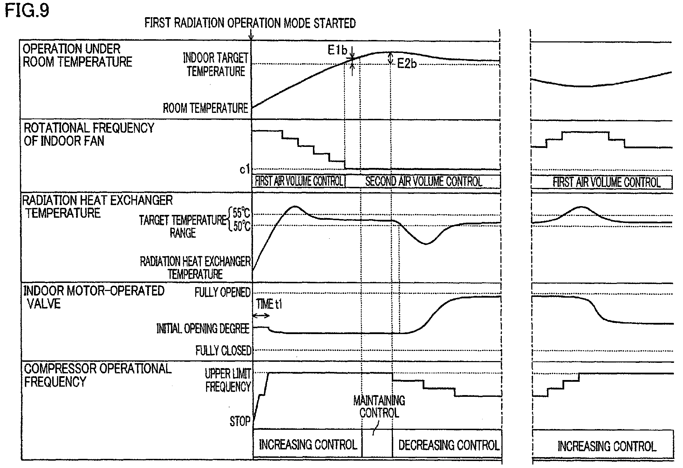

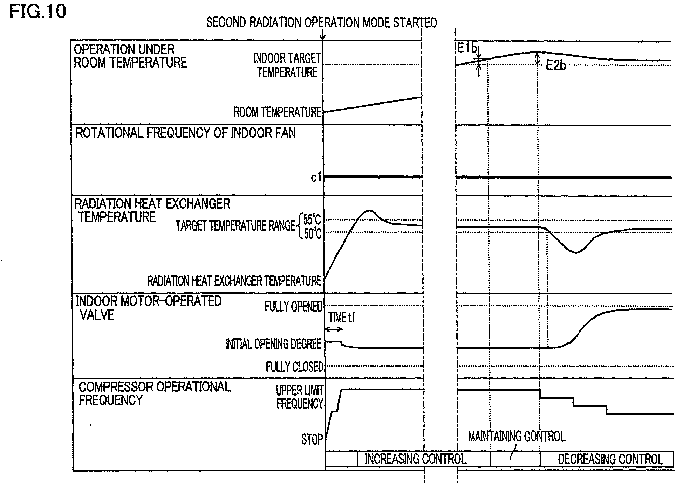

The description about the first radiation operation mode and the second radiation operation mode is provided with reference to graphs of FIG. 9 and FIG. 10. In each of the graphs of FIG. 9 and FIG. 10, the horizontal axis represents the time, and the vertical axis represents the indoor temperature, the rotational frequency of the indoor fan 21, the operational frequency of the compressor 30, radiation heat exchanger temperature (calculated value), and the opening degree of the indoor motor-operated valve 23.

### (Operation in Warm-Air Heating Operation Mode)

When the remote controller 4 is operated to start an operation in the warm-air heating operation mode, and when the "auto air volume" is selected as the air volume setting, the indoor fan controller 52 controls the rotational frequency of the indoor fan 21 according to the difference ΔT_{R} between the indoor target temperature and the indoor temperature. Further, the indoor motor-operated valve controller 53 closes the indoor motor-operated valve 23.

When the indoor temperature at the beginning of operation is lower than the indoor target temperature (when the temperature difference ΔT_{R} between the indoor target temperature and the indoor temperature is greater than 0°C), the compressor controller 54 performs control to increase the frequency of the compressor 30. When the indoor temperature increases and the temperature difference ΔT_{R} between the indoor target temperature and the indoor temperature is reduced to E1a=0°C, the frequency of the compressor 30 is maintained. Further, when the indoor temperature increases and the temperature difference ΔT_{R} decreases to E2a=-0.5°C, the frequency of the compressor 30 is controlled so as to decrease.

Further, when the remote controller 4 is operated to start an operation in the warm-air heating operation mode, and one of "Strong" or "Weak" is selected as the air volume setting, the rotational frequency of the indoor fan 21 is maintained at a predetermined rotational frequency, and the indoor motor-operated valve 23 and the compressor 30 are controlled as are done when the "auto air volume" is selected.

### (Operation in First Radiation Operation Mode)

As shown in FIG. 9, when the remote controller 4 is operated to start an operation in the first radiation operation mode, the indoor motor-operated valve 23 is controlled so that its opening degree is the initial opening degree, until a predetermined time t1 elapses from the beginning of operation. Upon elapse of the predetermined time t1, the opening degree of the indoor motor-operated valve 23 is controlled based on the radiation heat exchanger temperature and the target temperature range. Note that the initial opening degree of the indoor motor-operated valve 23 shown in FIG. 9 is smaller than an opening degree corresponding to the fully-opened state. However, the initial opening degree may correspond to the fully-opened state.

When the indoor temperature at the beginning of operation is lower than the indoor target temperature (when the temperature difference ΔT_{R} between the indoor target temperature and the indoor temperature is greater than 0°C), the indoor fan controller 52 starts the first air volume control, and the rotational frequency of the indoor fan 21 is controlled to a rotational frequency according to the difference ΔT_{R} between the indoor target temperature and the indoor temperature. Further, the compressor controller 54 performs control so as to increase the frequency of the compressor 30. However, when the frequency of the compressor 30 increases and becomes close to the upper limit frequency, the frequency is controlled so as not to exceed the upper limit frequency. Note that the frequency of the compressor 30 is maintained at the upper limit frequency in FIG. 9; however, this is to illustrate, in a simple manner, that the frequency of the compressor 30 is nearby the upper limit frequency (is at or slightly lower than the upper limit frequency). At this time, the frequency of the compressor 30 is high, and therefore the temperature (blow-out temperature) of the air blown out of the indoor unit 2 has a high temperature. Note that, although the frequency of the compressor 30 is maintained in the vicinity of the upper limit frequency in FIG. 9, the frequency of the compressor 30 may not rise to a frequency nearby the upper limit frequency, if the amount of increase in the increasing zone corresponding to the pseudo temperature is small, or if it takes a short time before the temperature difference ΔT_{R} to reach -1.0°C (until switching over occurs to the control based on the actual temperature difference ΔT_{R}), from the beginning of operation.

When the indoor temperature rises and the temperature difference ΔT_{R} between the indoor target temperature and the indoor temperature decreases to 0°C during the first air volume control, the indoor fan controller 52 causes switching over from the first air volume control to the second air volume control. This way, the rotational frequency of the indoor fan 21 is reduced to the rotational frequency c1.

When the indoor temperature further rises and the temperature difference ΔT_{R} between the indoor target temperature and the indoor temperature decreases to E2b=-1.5°C, the frequency of the compressor 30 is controlled so as to decrease from the upper limit frequency. This causes a decrease in the blow-out temperature. This way, the indoor temperature is made close to the indoor target temperature, and the warm air accumulated nearby the ceiling of the room is stirred, thus reducing the temperature difference between the temperatures in the areas nearby the ceiling and the floor surface of the room. The decrease in the frequency of the compressor 30 causes a temporary decrease in the radiation heat exchanger temperature; however, the indoor motor-operated valve controller 53 increases the opening degree of the indoor motor-operated valve 23, when the radiation heat exchanger temperature becomes lower than a predetermined temperature within the target temperature range (e.g. , 51°C). This raises the radiation heat exchanger temperature and restrains a decrease in the radiation heat exchanger temperature.

Further, when the indoor temperature drops and the temperature difference ΔT_{R} between the indoor target temperature and the indoor temperature becomes greater than the D1=0°C, the indoor fan controller 52 causes switching over from the second air volume control to the first air volume control. D1 may be a value greater than 0°C. Note that FIG. 9 omits illustration of the switching over from the second air volume control to the first air volume control, done by the indoor fan controller 52.

### (Operation in Second Radiation Operation Mode)

As shown in FIG. 10, when the remote controller 4 is operated to start an operation in the second radiation operation mode, the indoor fan controller 52 controls the rotational frequency of the indoor fan 21 to the constant rotational frequency c1. Further, the indoor motor-operated valve 23 is controlled so that its opening degree is the initial opening degree, until a predetermined time t1 elapses from the beginning of operation. Upon elapse of the predetermined time t1, the opening degree of the indoor motor-operated valve 23 is controlled based on the radiation heat exchanger temperature and the target temperature range.

When the indoor temperature at the beginning of operation is lower than the indoor target temperature (when the temperature difference ΔT_{R} between the indoor target temperature and the indoor temperature is greater than 0°C), the compressor controller 54 performs control to increase the frequency of the compressor 30. However, when the frequency of the compressor 30 increases and becomes close to the upper limit frequency, the frequency is controlled so as not to exceed the upper limit frequency. At this time, the frequency of the compressor 30 is high and the blowing air quantity is small. Therefore, the blow-out temperature is high.

When the indoor temperature further rises and the temperature difference ΔT_{R} between the indoor target temperature and the indoor temperature decreases to E2b=-1.5°C, the compressor controller 54 controls the frequency of the compressor 30 so that the frequency of the compressor 30 decrease from the upper limit frequency. Since the blow-out temperature drops, the indoor temperature is made close to the indoor target temperature, and the temperature difference between the temperatures in the areas nearby the ceiling and the floor surface of the room is reduced. The decrease in the frequency of the compressor 30 causes a temporary decrease in the radiation heat exchanger temperature; however, the indoor motor-operated valve controller 53 increases the opening degree of the indoor motor-operated valve 23, when the radiation heat exchanger temperature becomes lower than a predetermined temperature within the target temperature range (e.g., 51°C). This raises the radiation heat exchanger temperature and restrains a decrease in the radiation heat exchanger temperature. Note that FIG. 10 partially omits illustration of the transition of the temperature difference ΔT_{R} from the beginning of the operation to E2b.

### (Defrost Operation)

Further, to remove frost on the outdoor heat exchanger 32 during an operation in the heating operation mode, the four-way valve 31 in the air conditioner 1 is switched to the state shown in the broken line in FIG. 1 and FIG. 2 so as to switch the operation mode from the heating operation to defrost operation. In the air conditioner 1 of the embodiment, the indoor motor-operated valve 23 is closed during the defrost operation. This way, the low-temperature refrigerant does not flow in the radiation heat exchanger 22. Therefore, a decrease in the radiation heat exchanger temperature is restrained. When the heating operation is resumed, the radiation heat exchanger temperature is promptly brought within the target temperature range.

Note that the control of the indoor motor-operated valve 23 during the defrost operation is not limited to the above, and the indoor motor-operated valve 23 may be maintained at a predetermined opening degree until the radiation heat exchanger temperature becomes a predetermined temperature, and the indoor motor-operated valve 23 may be closed when the radiation heat exchanger temperature drops to the above predetermined temperature. In this case, the low-temperature refrigerant flows in the radiation heat exchanger 22, and therefore the radiation heat exchanger temperature drops to a certain extent. However, since the high-temperature refrigerant in the radiation heat exchanger 22 is usable for defrosting the outdoor heat exchanger 32, the frost on the outdoor heat exchanger 32 is more promptly removed than the above mentioned case. Further, this also prevents frosting on the radiation heat exchanger 22 during the defrost operation.

### <Characteristics of Air Conditioner 1>

In air conditioner 1 of the embodiment during the radiation heating operation, the timing of decreasing the frequency of the compressor 30 is made behind the timing of the same in the warm-air heating operation. This restrains a decrease in the temperature of the radiation heat exchanger 22, as compared with a case where the timing is made the same as that in the warm-air heating operation.

Further, by making the timing for increasing the frequency of the compressor 30 in the radiation heating operation earlier than the timing of the same in the warm-air heating operation, the temperature of the radiation heat exchanger 22 is brought up to a high temperature faster than a case where the timing is made the same as that in the warm-air heating operation. This enables maintaining of the temperature of the radiation heat exchanger 22 at a high temperature.

Further, by making the timing for making switching over from the control to decrease the frequency of the compressor 30 to the control to maintain the frequency during the radiation heating operation earlier than the timing of the same in the warm-air heating operation, the temperature of the radiation heat exchanger 22 is brought up to a high temperature faster than a case where the timing is made the same as that in the warm-air heating operation. This enables maintaining of the temperature of the radiation heat exchanger 22 at a high temperature.

In the air conditioner 1 of the embodiment, the blow-out temperature in the warm-air heating drops when the frequency of the compressor 30 is decreased. Therefore, the temperature difference between the temperatures in the areas nearby the ceiling and the floor surface of the room is reduced. Further, increasing the opening degree of the indoor motor-operated valve 23 after the frequency of the compressor 30 is decreased restrains a decrease in the temperature of the radiation heat exchanger 22. This improves the comfort.

In the air conditioner 1 of the embodiment, the frequency of the compressor 30 is restrained based on the indoor temperature; therefore the frequency of the compressor 30 is decreased when the temperature difference between the temperatures in the areas nearby the ceiling and the floor surface of the room is large.

In the air conditioner 1 of the embodiment, the opening degree of the indoor motor-operated valve 23 is controlled based on the temperature of the radiation heat exchanger 22. Therefore, increasing the opening degree of the indoor motor-operated valve 23 when there is a decrease in the frequency of the compressor 30 and in the temperature of the radiation heat exchanger 22 restrains a decrease in the temperature of the radiation heat exchanger 22.

Since the radiation heat exchanger 22 and the indoor motor-operated valve 23 of the air conditioner 1 of the embodiment are provided in parallel with the indoor heat exchanger 20, controlling the opening degree of the indoor motor-operated valve 23 allows adjustment of the flow rate of the refrigerant in the radiation heat exchanger 22 and the indoor heat exchanger 20. Further, it is possible to make switching over between the warm-air heating operation which performs the warm-air heating by causing the refrigerant not to flow in the radiation heat exchanger 22 and the radiation heating operation which causes the refrigerant to flow in the radiation heat exchanger 22, simply by opening or closing the indoor motor-operated valve 23.

Since the air conditioner 1 of the embodiment blows out warm wind from the upper end portion of its casing, the warm air is easily accumulated nearby the ceiling of the room, causing a temperature difference between temperatures in the areas nearby the ceiling and the floor surface of the room. Therefore, a structure to reduce the temperature difference between the temperatures in the areas nearby the ceiling and the floor surface of the room is particularly effective.

In the air conditioner 1 of the embodiment, the frequency of the compressor 30 is controlled based on the pseudo temperature when the temperature difference ΔT_{R} between the radiation heating operation and the indoor target temperature is greater than E1b or F1b, during the indoor temperature. Therefore, the frequency of the compressor 30 is promptly raised and made close to the upper limit frequency. This realizes a high heating performance of the radiation heating, and maintains the temperature of the radiation heat exchanger 22 at a high temperature.

Since the blowing air quantity is small in an operation in the second radiation operation mode, it is possible to prevent the indoor temperature from becoming excessively higher than the indoor target temperature, even if the timing for increasing or decreasing the frequency of the compressor 30 during the operation in the first radiation operation mode is different from the timing of the same in the warm-air heating operation. Further, in the second air volume control during an operation in the first radiation operation mode, the blowing air quantity is small, and since the first air volume control in which the blowing air quantity is larger than that of the second air volume control is control performed until the indoor temperature reaches the indoor target temperature, it is possible to prevent the indoor temperature from becoming excessively higher than the indoor target temperature, even if the timing for increasing or decreasing the frequency of the compressor 30 during the operation in the first radiation operation mode is different from the timing of the same in the warm-air heating operation.

In the air conditioner 1 of the embodiment, the indoor fan 21 is rotated at a small rotational frequency in the second air volume control during an operation in the first radiation operation mode and during an operation in the second radiation operation mode. This allows warm-air heating which causes the user to feel almost no draft. Further, by not stopping the indoor fan 21, the heat exchange amount by the indoor heat exchanger 20 is made large, and the pressure in the refrigerant circuit 10 is kept from being excessively high. Therefore, as compared with a case where the indoor fan 21 is stopped while the radiation heating is performed, the operational frequency of the compressor 30 in the outdoor unit can be increased and the heating performance can be improved.

In the air conditioner 1 of the embodiment during an operation in the first radiation operation mode, the first air volume control is performed when the indoor temperature is low, and the second air volume control is performed when the indoor temperature is high. This enables the indoor temperature to promptly rise when the indoor temperature is low, and automatically switches over to heating that causes almost no feeling of draft, when the indoor temperature becomes high.

The embodiment of the present invention is described above with reference to the drawings. However, it should be understood that the specific configuration is not limited to the embodiment. The scope of the present invention is defined not by the above embodiments but by claims set forth below, and shall encompass the equivalents in the meaning of the claims and every modification within the scope of the claims.

The temperature difference ΔT_{R}(E1a, F1a) at which the increasing zone and the maintaining zone switches over in the control of the compressor 30 during the warm-air heating operation are not limited to the value shown in FIG. 6(a), and may take a positive value for example. Further, the temperature difference ΔT_{R}(E1b, F1b) at which the increasing zone and the maintaining zone switches over in the control of the compressor 30 during the radiation heating operation is not limited to the value shown in FIG. 6(a). However, E1b and F1b are preferably smaller than E1a and F1a, respectively.

The temperature difference ΔT_{R}(E2a, F2a) at which the maintaining zone and the decreasing zone switches over in the control of the compressor 30 during the warm-air heating operation is not limited to the value shown in FIG. 6(a), and may take a positive value for example. Further, the temperature difference ΔT_{R}(E2b, F2b) at which the maintaining zone and the decreasing zone switches over in the control of the compressor 30 during the radiation heating operation is not limited to the value shown in FIG. 6(a). However, E1b and F1b are preferably smaller than E1a and F1a, respectively.

The temperature difference ΔT_{R} at which switching over occurs between the control based on the actual temperature difference ΔT_{R} and the control based on the pseudo temperature, when the temperature difference ΔT_{R} decreases in the control of compressor 30 during the radiation heating operation is not limited to E1b, and may be the temperature difference ΔT_{R}(E2b) at which the maintaining zone and the increasing zone switches over. Further, the temperature difference ΔT_{R} may take other values.

Further, the temperature difference ΔT_{R} at which switching over occurs between the control based on the actual temperature difference ΔT_{R} and the control based on the pseudo temperature, when the temperature difference ΔT_{R} increases in the control of the compressor 30 during the radiation heating operation is not limited to F1b, and may be the temperature difference ΔT_{R}(F2b) at which the maintaining zone and the increasing zone switches over. Further, the temperature difference ΔT_{R} may take other values.

In the embodiment, during the radiation heating operation, the compressor 30 is controlled by selecting the zone based on the pseudo temperature instead of the actual temperature difference ΔT_{R}, when the temperature difference ΔT_{R} is large, for the purpose of maintaining the frequency of the compressor 30 at the upper limit frequency. However, it is possible to control the frequency of the compressor 30 by selecting the zone always based on the actual temperature difference ΔT_{R}. In this modification however, the frequency of the compressor 30 may not reach the upper limit frequency, depending on the temperature difference ΔT_{R}.

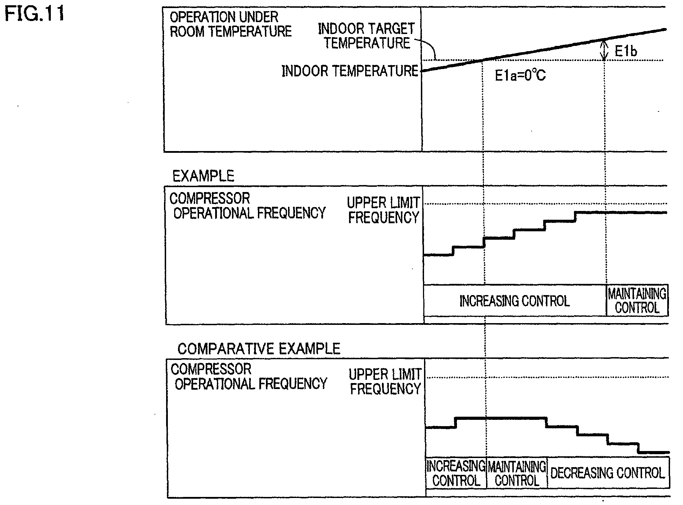

FIG. 11 shows a frequency of the compressor 30 (example shown in FIG. 11) in cases where the frequency of the compressor 30 does not reach the upper limit frequency in the above modification (pseudo temperature not used in controlling the compressor 30 during the radiation heating operation), and a frequency of the compressor 30 (comparative example shown in FIG. 11) in cases where the compressor 30 is controlled as shown in FIG. 6(a) instead of FIG. 6 (b), and where the rest of control is the same as the above modification.

E1b=-1.0°C which is the temperature difference Δ_{R} at which switching from the increasing zone Q4 to the maintaining zone Q3 shown in FIG. 6(b) occurs in cases where the temperature difference ΔT_{R} is decreasing is smaller than E1a= 0°C which is the temperature difference ΔT_{R} at which switching from the increasing zone P6 to the maintaining zone P5 shown in FIG. FIG. 6(a) occurs.

Therefore, switching over from the increasing zone Q4 to the maintaining zone Q3 occurs at a timing that is behind a timing at which switching from the increasing zone P6 to the maintaining zone P5 occurs, when the condition of the temperature difference ΔT_{R} is the same.

Thus, as shown in FIG. 11, in the radiation heating operation of the above modification in which the compressor 30 is controlled based on FIG. 6(a), it takes longer time before switching over from the increasing control to the maintaining control occurs, as compared with the cases where the compressor 30 is controlled based on FIG. 6 (a) as in the case of the warm-air heating operation. Since a decrease in the radiation heat exchanger temperature is delayed, the radiation heat exchanger temperature is maintained at a high temperature.

In the above embodiment, both the warm-air heating operation and the radiation heating operation perform control to decrease the frequency of the compressor 30 after making switching over from the control to increase the frequency of the compressor 30 to the control to make no changes in the frequency, in cases where the temperature difference ΔT_{R} is decreasing. However, it is possible to make switching over from the control to increase the frequency to the control to decrease the frequency. In other words, the maintaining zone on the left side (when temperature difference ΔT_{R} decreases) of FIG. 6 (a) or FIG. 6 (b) may be changed to the decreasing zone or the increasing zone. For example, when the maintaining zone is changed to the increasing zone, there will be delay in the timing for stopping the increasing control. Therefore, the temperature of the radiation heat exchanger 22 is maintained at a high temperature. However, in terms of comfort, the above embodiment in which the blow-out temperature and the temperature of the radiation heat exchanger 22 are gradually reduced is preferable.

In the above embodiment, both the warm-air heating operation and the radiation heating operation perform control to increase the frequency of the compressor 30 after making switching over from the control to decrease the frequency of the compressor 30 to the control to make no changes in the frequency, in cases where the temperature difference ΔT_{R} is increasing. However, it is possible to make switching over from the control to decrease the frequency to the control to increase the frequency. In other words, the maintaining zone on the right side (when the temperature difference ΔT_{R} increases) of FIG. 6 (a) or FIG. 6(b) may be changed to the decreasing zone or the increasing zone. For example, when the maintaining zone is changed to the increasing zone, the timing for starting the increasing control is made earlier. Therefore, the temperature of the radiation heat exchanger 22 is quickly brought up to a high temperature. However, in terms of comfort, the above embodiment in which the blow-out temperature and the temperature of the radiation heat exchanger 22 are gradually raised is preferable.

In the above embodiment, the rotational frequency of the indoor fan 21 is the rotational frequency c1 and is constant during the second air volume control of the first radiation operation mode and during an operation in the second radiation operation mode. However, the rotational frequency of the indoor fan 21 may vary as long as it is lower than the rotational frequency during the first air volume control and during the warm-air heating operation.

In the above embodiment, the indoor unit 2 draws in the air mainly through the principal inlet 28a provided to the lower wall of the casing 28 and blows out the air from the outlet 28d provided to the upper end portion of the casing 28. However, the positions of the principal inlet 28a and the outlet 28d are not limited to those in the embodiment. For example, the air may be drawn in through an upper part of the indoor unit 2 and blown out from a lower part of the indoor unit 2.

The above embodiment deals with a case where the present invention is applied to an air conditioner having an indoor unit which is installed in the vicinity of the floor surface. However, the present invention is applicable to an air conditioner having an indoor unit which is installed on a wall.

### Industrial Applicability

With the present invention, it is possible to maintain the temperature of the radiation panel (radiation heat exchanger) at a high temperature, in a heating operation that performs both the warm-air heating and the radiation heating.

### Reference Signs List

1 Air Conditioner
2 Indoor Unit
10 Refrigerant Circuit
11 Principal Channel
11a Branching Section
11b Merging Section
12 First Channel
13 Second Channel
20 Indoor Heat Exchanger
21 Indoor Fan (Fan)
22 Radiation Heat Exchanger
23 Indoor Motor-Operated Valve (Valve Structure)
28 Casing
28d Outlet
30 Compressor
32 Outdoor Heat Exchanger
34 Outdoor Motor-Operated Valve (Decompression Structure)
54 Compressor Controller (Controller)

## Claims

1. An air conditioner (1), comprising
a refrigerant circuit (10) having a compressor (30), an indoor heat exchanger (20), a radiation heat exchanger (22), a decompression structure (34), and an outdoor heat exchanger (32), wherein:
the indoor heat exchanger is provided inside an indoor unit (2) so as to oppose to a fan (21);
the radiation heat exchanger is provided on a surface of the indoor unit;
the air conditioner further comprising a controller (54) configured to increase or decrease the frequency of the compressor based on a temperature difference between an indoor target temperature and an indoor temperature;
the air conditioner is capable of performing a warm-air heating operation that performs warm-air heating by causing the refrigerant to flow not in the radiation heat exchanger but in the indoor heat exchanger, and
a radiation heating operation that causes the refrigerant to flow in the indoor heat exchanger to perform the warm-air heating and causes the refrigerant to flow also in the radiation heat exchanger to perform radiation heating; and
timings at which the controller increases or decreases the frequency of the compressor during the radiation heating operation and timings at which the controller increases or decreases the frequency of the compressor during the warm air heating operation, are made different from one another,
**characterised in that**
in cases where the temperature difference decreases, the controller
starts decreasing control for decreasing the frequency of the compressor, when the temperature difference is decreased to a first switch value; and
the first switch value in the radiation heating operation is smaller than the first switch value in the warm-air heating operation;
and/or **characterised in that**
in cases where the temperature difference increases, the controller
starts the increasing control which increases the frequency of the compressor, when the temperature difference increases up to a third switch value;
the third switch value in the radiation heating operation is smaller than the third switch value in the warm-air heating operation.

2. The air conditioner according to claim 1, wherein
in cases where the temperature difference decreases, the controller
makes switching over from an increasing control which increases the frequency of the compressor to a maintaining control which keeps the frequency of the compressor from varying, when the temperature difference decreases down to the second switch value which is higher than the first switch value, and
makes switching over from the maintaining control to the decreasing control, when the temperature difference further decreases down to the first switch value.

3. The air conditioner according to claim 2, wherein
the second switch value in the radiation heating operation is smaller than the second switch value in the warm-air heating operation.

4. The air conditioner according to claim 1, wherein
in cases where the temperature difference decreases, the controller
makes switching over from an increasing control which increases the frequency of the compressor to the decreasing control which decreases the frequency of the compressor, when the temperature difference decreases down to the first switch value.

5. The air conditioner according to claim 1, wherein
in cases where the temperature difference increases, the controller
makes switching over from the decreasing control which decreases the frequency of the compressor to a maintaining control which keeps the frequency of the compressor from varying, when the temperature difference increases up to a fourth switch value which is smaller than the third switch value, and
makes switching over from the maintaining control to the increasing control, when the temperature difference increases up to the third switch value.

6. The air conditioner according to claim 5, wherein
the fourth switch value in the radiation heating operation is smaller than the fourth switch value in the warm-air heating operation.

7. The air conditioner according to claim 1, wherein
when the temperature difference increases up to the third switch value, switching over occurs from the decreasing control which decreases the frequency of the compressor to the increasing control which increases the frequency of the compressor.

8. The air conditioner according to any of claims 1 to 7, wherein
the refrigerant circuit includes:
a principal channel (11) in which the decompression structure, the outdoor heat exchanger, and the compressor are provided in this order;
a first channel (12) having the indoor heat exchanger, which is configured to connect a branching section (11a) on the downstream side of the compressor in the principal channel with a merging section (11b) provided on the upstream side of the decompression structure, during a heating operation; and
a second channel (13) having the radiation heat exchanger, which connects the branching section and the merging section in parallel with the first channel during the heating operation,
a valve structure (23) provided in the second channel, between the radiation heat exchanger and the merging section, which is configured to adjust an amount of the refrigerant supplied to the radiation heat exchanger.

9. The air conditioner according to any of claims 1 to 8, wherein
the indoor unit has a casing (28) which accommodates therein the fan and the indoor heat exchanger, and an upper end portion of the casing has an outlet for blowing out the air.

## Patentansprüche

1. Klimaanlage (1), mit:
einem Kältemittelkreislauf (10), der einen Kompressor (30), einen Innenraumwärmetauscher (20), einen Strahlungswärmetauscher (22), eine Dekompressionsstruktur (34) und einen Außenwärmetauscher (32) aufweist, wobei:
der Innenraumwärmetauscher derart innerhalb einer Innenraumeinheit (2) vorgesehen ist, dass er einem Lüfter (21) gegenüberliegt;
der Strahlungswärmetauscher an einer Oberfläche der Innenraumeinheit vorgesehen ist,
die Klimaanlage ferner eine Steuereinheit (54) aufweist, die ausgestaltet ist, um die Frequenz des Kompressors auf Grundlage einer Temperaturdifferenz zwischen einer Innenraumzieltemperatur und einer Innenraumtemperatur zu erhöhen oder zu verringern;
die Klimaanlage in der Lage ist, einen Warmluftheizbetrieb, der ein Warmluftheizen durch Bewirken, dass das Kältemittel nicht in den Strahlungswärmetauscher aber in den Innenraumwärmetauscher strömt, durchführt, und
einen Strahlungswärmebetrieb durchzuführen, der bewirkt, dass das Kältemittel in den Innenraumwärmetauscher strömt, um das Warmluftheizen durchzuführen und bewirkt, dass das Kältemittel auch in den Strahlungswärmetauscher strömt, um Strahlungsheizen durchzuführen; und
Zeitpunkte zu denen die Steuereinrichtung die Frequenz des Kompressors während des Strahlungsheizbetriebs erhöht oder verringert und Zeitpunkte zu denen die Steuereinrichtung die Frequenz des Kompressors während des Warmluftheizbetriebs erhöht oder verringert unterschiedlich zueinander ausgestaltet sind,
**dadurch gekennzeichnet, dass**
in Fällen, in denen sich die Temperaturdifferenz verringert, die Steuereinrichtung
eine Verringerungssteuerung zum Verringern der Frequenz des Kompressors beginnt, wenn sich die Temperaturdifferenz auf einen ersten Schaltwert verringert; und
der erste Schaltwert im Strahlungsheizbetrieb kleiner ist als der erste Schaltwert im Warmluftheizbetrieb;
und/oder **dadurch gekennzeichnet, dass**
in Fällen in denen sich die Temperaturdifferenz vergrößert, die Steuereinrichtung
die Erhöhungssteuerung beginnt, welche die Frequenz des Kompressors erhöht, wenn sich die Temperaturdifferenz bis zu einem dritten Schaltwert vergrößert;
der dritte Schaltwert im Strahlungsheizbetrieb kleiner ist als der dritte Schaltwert im Warmluftheizbetrieb.

2. Klimaanlage nach Anspruch 1, wobei
in Fällen, in denen sich die Temperaturdifferenz verringert, die Steuereinrichtung
von einer Erhöhungssteuerung, welche die Frequenz des Kompressors erhöht auf eine Erhaltungssteuerung umschaltet, welche das Variieren der Frequenz des Kompressors verhindert, wenn sich die Temperaturdifferenz auf einen zweiten Schaltwert verringert, der höher ist als der erste Schaltwert, und
von der Erhaltungssteuerung zu der Verringerungssteuerung umschaltet, wenn sich die Temperaturdifferenz weiter bis zu dem ersten Schaltwert verringert.

3. Klimaanlage nach Anspruch 2, wobei
der zweite Schaltwert im Strahlungsheizbetrieb kleiner ist als der zweite Schaltwert im Warmluftheizbetrieb.

4. Klimaanlage nach Anspruch 1, wobei
in Fällen in denen sich die Temperaturdifferenz verringert, die Steuereinrichtung
von einer Erhöhungssteuerung, welche die Frequenz des Kompressors erhöht, auf die Verringerungssteuerung umschaltet, welche die Frequenz des Kompressors verringert, wenn sich die Temperaturdifferenz bis zu dem ersten Schaltwert verringert.

5. Klimaanlage nach Anspruch 1, wobei
in Fällen in denen sich die Temperaturdifferenz vergrößert, die Steuereinrichtung
von der Verringerungssteuerung, welche die Frequenz des Kompressors verringert, auf eine Erhaltungssteuerung umschaltet, welche das Variieren der Frequenz des Kompressors verhindert, wenn sich die Temperaturdifferenz bis zu einem vierten Schaltwert vergrößert, der kleiner ist als der dritte Schaltwert, und
von der Erhaltungssteuerung auf die Erhöhungssteuerung umschaltet, wenn sich die Temperaturdifferenz bis zu dem dritten Schaltwert vergrößert.

6. Klimaanlage nach Anspruch 5, wobei
der vierte Schaltwert im Strahlungsheizbetrieb kleiner ist als der vierte Schaltwert im Warmluftheizbetrieb.

7. Klimaanlage nach Anspruch 1, wobei
wenn sich die Temperaturdifferenz bis zu dem dritten Schaltwert vergrößert, ein Umschalten von der Verringerungssteuerung, welche die Frequenz des Kompressors verringert, zu der Erhöhungssteuerung erfolgt, welche die Frequenz des Kompressors erhöht.

8. Klimaanlage nach einem der Ansprüche 1 bis 7, wobei der Kältekreislauf aufweist:
einen Hauptkanal (11) in dem die Dekompressionsstruktur, der Außenwärmetauscher und der Kompressor in dieser Reihenfolge angeordnet sind;
einen ersten Kanal (12), der den Innenraumwärmetauscher aufweist und ausgestaltet ist, um einen Abzweigungsabschnitt (11a) auf der stromabwärtigen Seite des Kompressors in dem Hauptkanal mit einem Zusammenführungsabschnitt (11b), der an der stromaufwärtigen Seite der Dekompressionsstruktur vorgesehen ist, während eines Heizbetriebs zu verbinden; und
einen zweiten Kanal (13), der den Strahlungswärmetauscher aufweist und den Abzweigungsabschnitt und den Zusammenführungsabschnitt während des Heizbetriebs parallel zu dem ersten Kanal verbindet,
eine Ventilstruktur (23), die in dem zweiten Kanal zwischen dem Strahlungswärmetauscher und dem Zusammenführungsabschnitt vorgesehen ist, welche ausgestaltet ist, um eine Menge des Kältemittels, die dem Strahlungswärmetauscher zugeführt wird, einzustellen.

9. Klimaanlage nach einem der Ansprüche 1 bis 8, wobei
die Innenraumeinheit ein Gehäuse (28) aufweist, welches darin den Lüfter und den Innenraumwärmetauscher aufnimmt und ein oberer Endabschnitt des Gehäuses einen Auslass zum Ausblasen der Luft aufweist.

## Revendications

1. Climatiseur (1), comprenant :
un circuit réfrigérant (10) comportant un compresseur (30), un échangeur de chaleur d'intérieur (20), un échangeur de chaleur à rayonnement (22), une structure de décompression (34) et un échangeur de chaleur d'extérieur (32), dans lequel :
l'échangeur de chaleur d'intérieur est aménagé à l'intérieur d'une unité d'intérieur (2) afin d'être en regard d' un ventilateur (21) ;
l'échangeur de chaleur à rayonnement est aménagé sur une surface de l'unité d'intérieur ;
le climatiseur comprenant en outre un dispositif de commande (54) configuré pour augmenter ou réduire la fréquence du compresseur en fonction d'une différence de température entre une température cible d'intérieur et une température d'intérieur ;
le climatiseur est capable de réaliser une opération de chauffage par air chaud qui assure e un chauffage par air chaud en faisant en sorte que le réfrigérant s'écoule non dans l'échangeur de chaleur à rayonnement, mais dans l'échangeur de chaleur d'intérieur, et
une opération de chauffage par rayonnement qui fait que le réfrigérant s'écoule dans l'échangeur de chaleur d'intérieur pour assurer le chauffage par air chaud et que le réfrigérant s'écoule également dans l'échangeur de chaleur à rayonnement pour assurer un chauffage par rayonnement ; et
des cycles où le dispositif de commande augmente ou réduit la fréquence du compresseur durant l'opération de chauffage par rayonnement et des cycles où le dispositif de commande augmente ou réduit la fréquence du compresseur durant l'opération de chauffage par air chaud sont différenciés les uns des autres,
**caractérisé en ce que**,
dans les cas où la différence de température diminue, le dispositif de commande :
démarre la commande de réduction pour réduire la fréquence du compresseur lorsque la différence de température diminue jusqu'à une première valeur de commutation ; et
la première valeur de commutation dans l'opération de chauffage par rayonnement est inférieure à la première valeur de commutation dans l'opération de chauffage par air chaud ;
et/ou **caractérisé en ce que**,
dans les cas où la différence de température augmente, le dispositif de commande :
démarre la commande d'augmentation qui augmente la fréquence du compresseur lorsque la différence de température augmente jusqu'à une troisième valeur de commutation ; et
la troisième valeur de commutation dans l'opération de chauffage par rayonnement est inférieure à la troisième valeur de commutation dans l'opération de chauffage par air chaud.

2. Climatiseur selon la revendication 1, dans lequel, dans les cas où la différence de température diminue, le dispositif de commande :
effectue une permutation d'une commande d'augmentation, qui augmente la fréquence du compresseur, à une commande de maintien, qui empêche la fréquence du compresseur de varier, lorsque la différence de température diminue jusqu'à la deuxième valeur de commutation qui est supérieure à la première valeur de commutation et
effectue une permutation de la commande de maintien à la commande de réduction lorsque la différence de température diminue encore jusqu'à la première valeur de commutation.

3. Climatiseur selon la revendication 2, dans lequel :
la deuxième valeur de commutation dans l'opération de chauffage par rayonnement est inférieure à la deuxième valeur de commutation dans l'opération de chauffage par air chaud.

4. Climatiseur selon la revendication 1, dans lequel, dans les cas où la différence de température diminue, le dispositif de commande :
effectue une permutation d'une commande d'augmentation, qui augmente la fréquence du compresseur, à la commande de réduction qui réduit la fréquence du compresseur lorsque la différence de température diminue jusqu'à la première valeur de commutation.

5. Climatiseur selon la revendication 1, dans lequel, dans les cas où la différence de température augmente, le dispositif de commande :
effectue une permutation de la commande de réduction, qui réduit la fréquence du compresseur, à une commande de maintien, qui empêche la fréquence du compresseur de varier lorsque la différence de température augmente jusqu'à une quatrième valeur de commutation qui est inférieure à la troisième valeur de commutation, et
effectue une permutation de la commande de maintien à la commande d'augmentation lorsque la différence de température augmente jusqu'à la troisième valeur de commutation.

6. Climatiseur selon la revendication 5, dans lequel :
la quatrième valeur de commutation dans l'opération de chauffage par rayonnement est inférieure à la quatrième valeur de commutation dans l'opération de chauffage par air chaud.

7. Climatiseur selon la revendication 1, dans lequel, lorsque la différence de température augmente jusqu'à la troisième valeur de commutation, il se produit une permutation de la commande de réduction, qui réduit la fréquence du compresseur, à la commande d'augmentation, qui augmente la fréquence du compresseur.

8. Climatiseur selon l'une quelconque des revendications 1 à 7, dans lequel :
le circuit réfrigérant comprend :
un canal principal (11) dans lequel la structure de décompression, l'échangeur de chaleur d'extérieur et le compresseur sont aménagés dans cet ordre ;
un premier canal (12) comportant l'échangeur de chaleur d'intérieur, qui est configuré pour raccorder une section de bifurcation (11a) du côté aval du compresseur dans le canal principal avec une section de jonction (11b) aménagée du côté amont de la structure de décompression durant une opération de chauffage ; et
un second canal (13) comportant l'échangeur de chaleur à rayonnement, qui raccorde la section de bifurcation et la section de jonction en parallèle avec le premier canal durant l'opération de chauffage,
une structure à valve (23) aménagée dans le second canal, entre l'échangeur de chaleur à rayonnement et la section de jonction , qui est configurée pour ajuster la quantité du réfrigérant fourni à l'échangeur de chaleur à rayonnement.

9. Climatiseur selon l'une quelconque des revendications 1 à 8, dans lequel :
l'unité d'intérieur comporte un boîtier (28) qui reçoit le ventilateur et l'échangeur de chaleur d'intérieur et
une portion d'extrémité supérieure du boîtier comporte une sortie pour évacuer l'air.
